# EUROPEAN PATENT APPLICATION

(11) **EP 4 836 143 A1**
(43) Date of publication of application: **04.11.2026**
(21) Application number: 24922512.9
(22) Date of filing: 17.04.2024
(51) Int. Cl.: H01M 50/264, H01M 10/04, B65G 47/80

(54) **SOCKET AND SECONDARY BATTERY MANUFACTURING SYSTEM**

(30) Priority: 30.01.2024 KR 20240013864
(71) Applicant: SAMSUNG SDI CO., LTD., Yongin-si, Gyeonggi-do 17084 (KR)
(72) Inventor: CHOI, Dongsu, Yongin-si Gyeonggi-do 17084 (KR); YOO, Byungchul, Yongin-si Gyeonggi-do 17084 (KR); CHOI, Seulong, Yongin-si Gyeonggi-do 17084 (KR); YEON, Dae Hyun, Yongin-si Gyeonggi-do 17084 (KR)
(74) Representative: Bardehle Pagenberg Partnerschaft mbB Patentanwälte Rechtsanwälte
(86) International application number: PCT/KR2024/005136
(87) International publication number: WO 2025/164846

(57) **Abstract**

The present disclosure relates to a socket, and a technical problem to be solved is to provide a socket in which efficiency of a secondary battery manufacturing process is increased. To this end, the socket of the present disclosure includes a plate including a first surface and a second surface opposite to the first surface, a first seating part defined by the first surface of the plate, a first wall, and a first sidewall and a second sidewall extending in a first direction from both sides of the first wall, respectively, and a second seating part defined by the second surface of the plate, a second wall, and a third sidewall and a fourth sidewall extending in the first direction from both sides of the second wall, respectively. The first sidewall and the second sidewall are spaced apart in a second direction different from the first direction, the third sidewall and the fourth sidewall are spaced apart in the second direction, the first wall extends in a positive third direction from one end of the plate, the second wall extends in a negative third direction from another end of the plate, and the third direction is different from each of the first direction and the second direction.

## Description

### TECHNICAL FIELD

Aspects of some embodiments of the present disclosure relate to a socket and a secondary battery manufacturing method.

### BACKGROUND

A secondary battery is a rechargeable battery and refers to a battery capable of being charged and discharged multiple times. Such a secondary battery is mainly used in various application fields such as electronic products (e.g., smartphones, laptops, and tablets), electric vehicles, photovoltaic power generation, and emergency power supply devices. In particular, a lithium-ion battery has a high energy density and a high charge/discharge efficiency, and thus is used in various electronic products and electric vehicles.

A shape of a secondary battery varies depending on a product in which the secondary battery is used. For example, a size of a secondary battery used in an electric vehicle and a size of a secondary battery used in an electronic product are different from each other. In a secondary battery manufacturing process, various sockets for gripping secondary batteries are required to transfer various secondary batteries. In addition, an operation of replacing each socket corresponding to various secondary batteries is required.

The above-described information disclosed in this Background section is only for enhancement of understanding of the background and therefore may contain information that does not constitute prior art.

### DETAILED DESCRIPTION OF THE INVENTION

### Technical Problem

A technical problem to be solved by the present disclosure is to provide a socket and a secondary battery manufacturing method for solving the above-described problems.

However, technical problems to be solved by the present disclosure are not limited to the above-described problems, and other problems that are not mentioned may be clearly understood by those skilled in the art from the description set forth below.

### SUMMARY

In some embodiments, a socket includes a plate including a first surface and a second surface opposite to the first surface, a first seating part defined by the first surface of the plate, a first wall, and a first sidewall and a second sidewall extending in a first direction from both sides of the first wall, respectively, and a second seating part defined by the second surface of the plate, a second wall, and a third sidewall and a fourth sidewall extending in the first direction from both sides of the second wall, respectively. The first sidewall and the second sidewall are spaced apart in a second direction different from the first direction, the third sidewall and the fourth sidewall are spaced apart in the second direction, the first wall extends in a positive direction of a third direction from one end of the plate, the second wall extends in a negative direction of the third direction from another end of the plate, and the third direction is different from each of the first direction and the second direction.

In some embodiments, the first seating part may include an open first surface facing the first wall, and the second seating part may include an open second surface facing the second wall.

In some embodiments, the first wall and the second wall are spaced apart in the first direction.

In some embodiments, the first seating part has a first length in the first direction, the second seating part has a second length in the first direction, and the first length is different from the second length.

In some embodiments, the first seating part has a first length in the first direction, the second seating part has a second length in the first direction, and the first length is equal to the second length.

In some embodiments, the first seating part has a first width in the second direction, the second seating part has a second width in the second direction, and the first width is different from the second width.

In some embodiments, a volume of the first seating part is different from a volume of the second seating part.

In some embodiments, the first seating part corresponds to a first type of battery cell, the second seating part corresponds to a second type of battery cell, and the first type of battery cell and the second type of battery cell are different from each other in at least one of a width or a breadth.

In some embodiments, one surface of the first sidewall is connected to one surface of the third sidewall, and one surface of the second sidewall is connected to one surface of the fourth sidewall.

In some embodiments, the socket further includes a protruding line protruding in the second direction on each of the first sidewall and the second sidewall.

In some embodiments, a secondary battery manufacturing method includes gripping, by a fixing device, a socket case on a moving belt, separating, by a separating device, a coupling member coupling the socket case and a socket, gripping, by a rotating device, the socket in which a first seating part is exposed, rotating, by the rotating device, the socket such that a second seating part of the socket is exposed, and coupling, by the separating device, the coupling member to the socket and the socket case.

In some embodiments, the socket case may include a bearing coupled to an outside of the socket case, and the gripping the socket case may include moving the fixing device toward the bearing, and gripping, by the fixing device, the bearing.

In some embodiments, the rotating the socket may include separating, by the rotating device, the socket from the socket case, and rotating, by the rotating device, the socket by 180 degrees about a rotation axis.

In some embodiments, the separating the socket from the socket case may include moving, by the rotating device, the socket in a first direction to separate the socket from the socket case, the rotation axis is orthogonal to the first direction, and the first direction is a traveling direction of the moving belt.

In some embodiments, the separating the socket from the socket case may include moving, by the rotating device, the socket in a first direction to separate the socket from the socket case, the rotation axis is orthogonal to the first direction, and the first direction is orthogonal to a traveling direction of the moving belt.

In some embodiments, the coupling may include moving, by the rotating device, the socket to align the socket on the socket case, and coupling the coupling member to each of a hole of the socket case and a hole of the socket.

In some embodiments, the secondary battery manufacturing method further includes separating the fixing device from the socket case, and disposing a specific type of battery cell corresponding to the second seating part into the socket.

In some embodiments, the socket may include a plate including a first surface and a second surface opposite to the first surface, the first seating part defined by the first surface of the plate, a first wall, and a first sidewall and a second sidewall extending in a first direction from both sides of the first wall, respectively, and the second seating part defined by the second surface of the plate, a second wall, and a third sidewall and a fourth sidewall extending in the first direction from both sides of the second wall, respectively. The first sidewall and the second sidewall are spaced apart in a second direction different from the first direction, the third sidewall and the fourth sidewall are spaced apart in the second direction, the first wall extends in a positive third direction from one end of the plate, the second wall extends in a negative third direction from another end of the plate, and the third direction is different from each of the first direction and the second direction.

In some embodiments, the socket may further include a protruding line formed on one surface of the socket, and the protruding line of the socket is coupled to a groove of the socket case.

In some embodiments, the first seating part corresponds to a first type of battery cell, the second seating part corresponds to a second type of battery cell, and the first type of battery cell and the second type of battery cell are different from each other in at least one of a width or a breadth.

### ADVANTAGEOUS EFFECTS

According to some embodiments of the present disclosure, by using a socket including a first seating part and a second seating part that are different from each other, different types of battery cells may be seated on a single socket.

According to some embodiments of the present disclosure, different types of battery cells may be seated on one socket, and thus spatial efficiency required for storage of the socket may be improved, and efficiency of a secondary battery manufacturing process may be improved.

According to some embodiments of the present disclosure, by using a fixing device, a separating device, and a rotating device, a time required for replacing a socket may be reduced, and efficiency of a secondary battery manufacturing process may be increased.

However, effects obtainable from the present disclosure are not limited to the above-described effects, and other technical effects that are not mentioned may be clearly understood by those skilled in the art from the description set forth below.

### BRIEF DESCRIPTION OF THE DRAWINGS

The following drawings attached to this specification illustrate preferred embodiments of the present disclosure, and serve to further understand the technical idea of the present disclosure together with the detailed description set forth below, and therefore the present disclosure should not be construed as being limited only to matters described in such drawings.
FIG. 1 illustrates a secondary battery manufacturing system according to some embodiments of the present disclosure.
FIG. 2 illustrates a socket on which a first type of battery cell is seated according to some embodiments of the present disclosure.
FIG. 3 illustrates a socket on which a second type of battery cell is seated according to some embodiments of the present disclosure.
FIG. 4 is a perspective view illustrating a socket according to some embodiments of the present disclosure.
FIG. 5 is a perspective view illustrating a socket according to some embodiments of the present disclosure.
FIG. 6 is a perspective view illustrating a socket according to some embodiments of the present disclosure.
FIG. 7 illustrates a secondary battery manufacturing system according to some embodiments of the present disclosure.
FIG. 8 illustrates operations of a fixing device and a separating device according to some embodiments of the present disclosure.
FIG. 9 illustrates an operation in which a rotating device grips a socket according to some embodiments of the present disclosure.
FIG. 10 illustrates an operation in which a rotating device rotates a socket according to some embodiments of the present disclosure.
FIG. 11 illustrates an operation of coupling a socket in which a second seating part is exposed to a socket case according to some embodiments of the present disclosure.
FIG. 12 is a flowchart illustrating a secondary battery manufacturing method according to some embodiments of the present disclosure.

### DETAILED DESCRIPTION

Hereinafter, preferred embodiments of the present disclosure will be described in detail with reference to the accompanying drawings. Prior to this, the terms or words used in this specification and the claims should not be construed as limited to ordinary or dictionary meanings, but should be construed as meanings and concepts consistent with the technical idea of the present disclosure based on the principle that an inventor may appropriately define the concept of a term in order to describe his or her own invention in the best way. Therefore, the embodiments described in this specification and the configurations illustrated in the drawings are merely some of the most preferred embodiments of the present disclosure and do not represent all the technical ideas of the present disclosure, and therefore it should be understood that there may be various equivalents and modifications that may replace the embodiments at the time of filing this application.

Furthermore, the terms "comprise, include" and/or "comprising, including" used in this specification specify the presence of stated shapes, numbers, steps, operations, members, elements, and/or groups thereof, but do not exclude the presence or addition of one or more other shapes, numbers, operations, members, elements, and/or groups thereof.

Furthermore, to help understanding of the disclosure, the accompanying drawings may be illustrated not to actual scale, but with dimensions of some components exaggerated. Furthermore, the same reference numerals may be assigned to the same components in different embodiments.

A statement that two comparison targets are "identical" means that the two comparison targets are "substantially identical." Therefore, substantial identity may include a case of having a deviation regarded as a low level in the art, for example, a deviation within 5%. Furthermore, that a certain parameter is uniform in a predetermined region may mean that the certain parameter is uniform from an average viewpoint.

Although first, second, etc. are used to describe various components, the various components are not limited by such terms. Such terms are used only to distinguish one component from another component, and unless specifically stated otherwise, a first component may be a second component.

Throughout the specification, unless specifically stated otherwise, each component may be singular or plural.

That a certain configuration is disposed on an "upper portion (or lower portion)" of a component or "above (or below)" a component may mean not only that the certain configuration is disposed in contact with an upper surface (or lower surface) of the component, but also that another configuration may be interposed between the component and the certain configuration disposed above (or below) the component.

Furthermore, when it is described that a certain component is "connected," "coupled," or "attached" to another component, it should be understood that the components may be directly connected or attached to each other, but another component may be "interposed" between the components, or each component may be "connected," "coupled," or "attached" through another component. Furthermore, when a certain part is electrically coupled to another part, electrically coupling includes not only a case of being directly connected, but also a case of being connected with another element interposed therebetween.

Throughout the specification, when referring to "A and/or B," unless specifically stated otherwise, "A and/or B" means A, B, or A and B. That is, "and/or" includes all combinations or any combination of a plurality of listed items. When referring to "C-D," unless specifically stated otherwise, "C-D" means greater than or equal to C and less than or equal to D.

The terms used in this specification are for describing embodiments of the present disclosure and are not intended to limit the present disclosure.

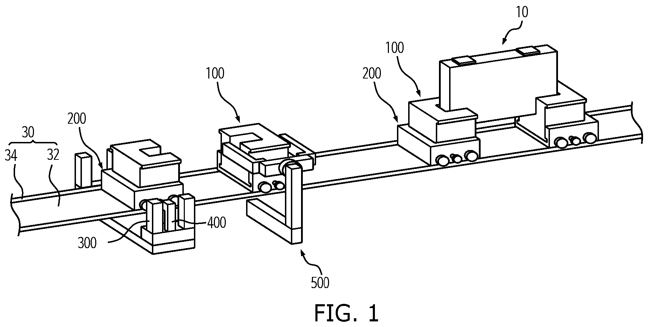

FIG. 1 illustrates a secondary battery manufacturing system according to some embodiments of the present disclosure.

Referring to FIG. 1, the secondary battery manufacturing system may include a socket 100, a socket case 200, a fixing device 300, a separating device 400, a rotating device 500, and a moving device 30.

The moving device 30 may include a moving belt 32 and a guide rail 34. The moving belt 32 may move in one direction. For example, the moving belt 32 may receive power and move in one direction together with the socket case 200 disposed on the moving belt 32. For example, the moving belt 32 may be a timing belt.

The guide rail 34 may be disposed on both sides of the moving belt 32. A bearing of the socket case 200 may be disposed on the guide rail 34. As the moving belt 32 moves in one direction, the bearing of the socket case 200 may rotate in one direction along the guide rail 34.

The socket case 200 may be disposed on the moving device 30. As illustrated, a pair of socket cases 200 may be disposed to face each other. For example, the pair of socket cases 200 may be disposed to face each other along a direction in which the moving belt 32 moves. The socket case 200 may be coupled and fixed on the moving belt 32.

In some embodiments, a first type of battery cell 10 may be disposed on the socket 100. For example, the first type of battery cell 10 may be seated on a pair of sockets 100 disposed to face each other. The first type of battery cell 10 may be disposed on or separated from the socket 100 by a battery transfer robot.

In some embodiments, the first type of battery cell 10 may be a battery cell that has completed a charge/discharge test. However, the present disclosure is not limited thereto. For example, the first type of battery cell 10 may be a battery cell that moves to a test device for a charge/discharge test.

The fixing device 300 may be disposed on both sides of the socket case 200. The fixing device 300 may fix the socket 100 and the socket case 200 such that one of a first seating part or a second seating part is exposed. The separating device 400 may be disposed on one side of the socket case 200. The separating device 400 may couple or separate a coupling member coupled to the socket 100 and the socket case 200. Although the fixing device 300 and the separating device 400 are illustrated as being coupled to one piece of equipment, the present disclosure is not limited thereto. For example, the fixing device 300 and the separating device 400 may be devices separated from each other.

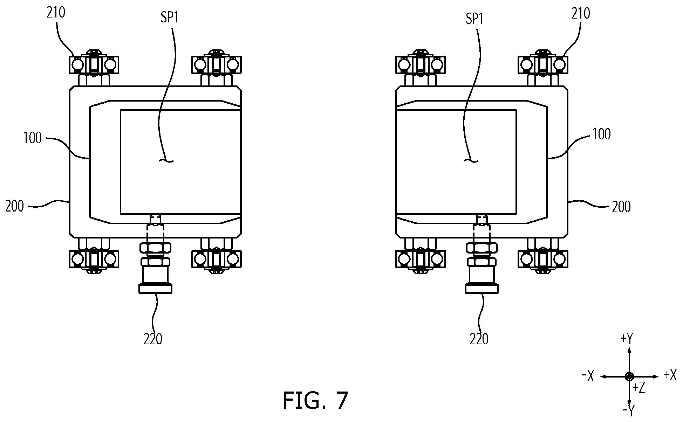

The rotating device 500 may be disposed on one side of the socket 100. The rotating device 500 may grip the socket 100 and separate the socket 100 from the socket case 200. The rotating device 500 may rotate the socket 100 by 180 degrees about a rotation axis. For example, the rotating device 500 may rotate the socket 100 by 180 degrees about the rotation axis such that the first seating part of the socket 100 is not exposed and the second seating part is exposed. Operations of the fixing device 300, the separating device 400, and the rotating device 500 will be described in detail with reference to FIG. 7.

Although the fixing device 300, the separating device 400, and the rotating device 500 are illustrated as being disposed on different sockets 100, respectively, such illustration is for convenience of description. Unlike what is illustrated, the fixing device 300, the separating device 400, and the rotating device 500 may be disposed on the same socket 100. For example, a fixing device, a separating device, and a rotating device corresponding to each socket may be disposed.

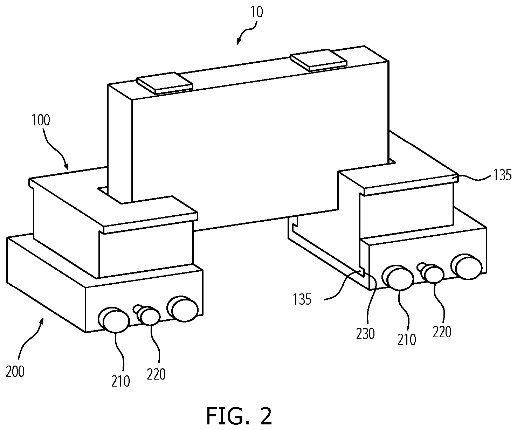

FIG. 2 is a perspective view illustrating a socket and a socket case according to some embodiments of the present disclosure.

In an embodiment, the socket case 200 may include the bearing 210, a coupling member 220, and a groove 230. Referring to FIG. 2, the socket 100 may be coupled to the socket case 200. For example, a protruding line 135 of the socket 100 may be fitted into the groove 230 of the socket case 200. The coupling member 220 may be inserted into a hole of the socket 100 and a hole of the socket case 200, and the socket 100 and the socket case 200 may be fixed.

The first type of battery cell 10 may be disposed on a pair of sockets 100. A part of the first type of battery cell 10 may be seated on the first seating part of one socket 100, and a part of the first type of battery cell 10 may be seated on the first seating part of another socket 100. The first seating part of the socket 100 may correspond to the first type of battery cell 10. The seated first type of battery cell 10 may be transferred to other equipment by the moving device (e.g., 30 in FIG. 1).

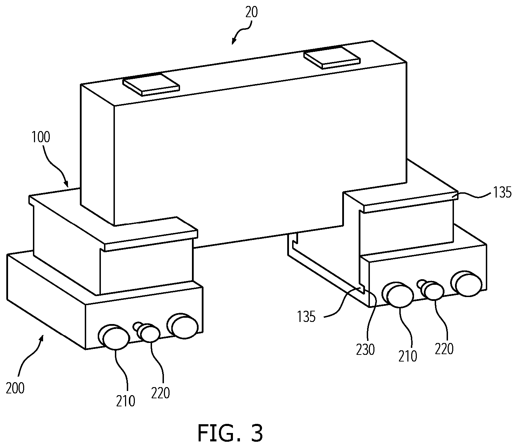

FIG. 3 is a perspective view illustrating a socket according to some embodiments of the present disclosure. For convenience of description, descriptions will focus on differences from what is described in FIG. 2. For reference, the socket 100 of FIG. 3 may be the socket 100 obtained by rotating the socket 100 of FIG. 2 by 180 degrees about the rotation axis. As the socket 100 is rotated by 180 degrees about the rotation axis, the first seating part of the socket 100 may not be exposed and the second seating part may be exposed.

Referring to FIG. 3, a second type of battery cell 20 may be disposed on a pair of sockets 100. The second type of battery cell 20 may be different in size from the first type of battery cell 10. For example, the second type of battery cell 20 may be different from the first type of battery cell 10 in at least one of a width or a breadth.

Although the first type of battery cell 10 and the second type of battery cell 20 are illustrated as prismatic battery cells, the present disclosure is not limited thereto. For example, the first type of battery cell 10 and the second type of battery cell 20 may be pouch-type battery cells, cylindrical battery cells, or the like.

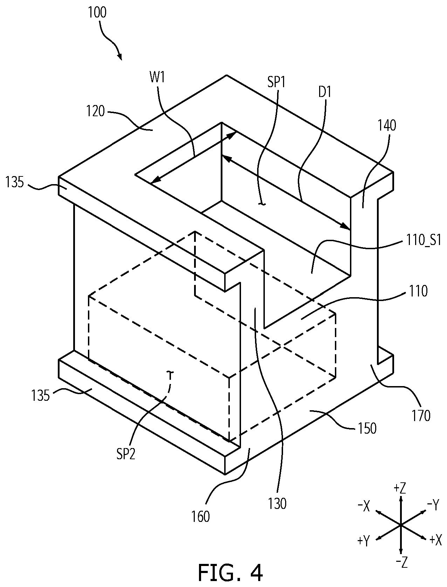

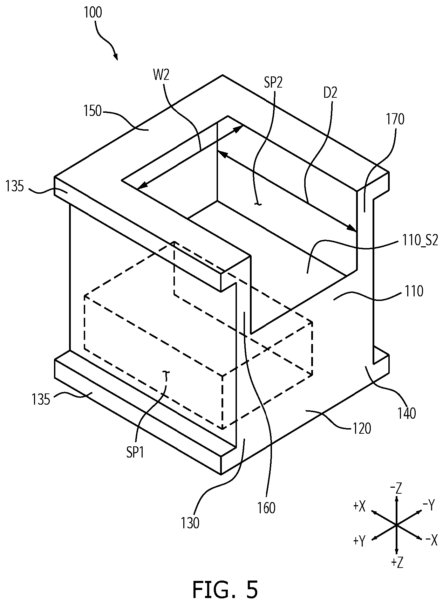

FIG. 4 is a perspective view illustrating a socket according to some embodiments of the present disclosure. FIG. 5 is a perspective view illustrating a socket according to some embodiments of the present disclosure. For reference, the socket 100 of FIG. 5 may have a shape obtained by rotating the socket 100 of FIG. 4 by 180 degrees about a Y-axis as a rotation axis.

Referring to FIG. 4, a first direction X may refer to an X-axis direction. In an embodiment, the socket 100 may move in the first direction X by the moving belt. A second direction Y may be orthogonal to the first direction X. The second direction Y may refer to a Y-axis direction. A third direction Z may be orthogonal to each of the first direction X and the second direction Y. The third direction Z may refer to a Z-axis direction.

The first direction X may include a positive first direction +X and a negative first direction -X. The second direction Y may include a positive second direction +Y and a negative second direction -Y. The third direction Z may include a positive third direction +Z and a negative third direction -Z.

As illustrated, the positive first direction +X and the negative first direction -X may be directions opposite to each other. The positive second direction +Y and the negative second direction -Y may be directions opposite to each other. The positive third direction +Z and the negative third direction -Z may be directions opposite to each other.

The socket 100 may include a plate 110, a first wall 120, a second wall 150, a first sidewall 130, a second sidewall 140, a third sidewall 160, a fourth sidewall 170, the first seating part SP1, and the second seating part SP2.

The plate 110 may be positioned at a center of the socket 100. The plate 110 may include a first surface 110_S1 and a second surface 110_S2. The first wall 120, the first sidewall 130, and the second sidewall 140 may be disposed on the first surface 110_S1 of the plate 110.

The first wall 120 may be disposed at one end of the plate 110 (e.g., an end in the negative first direction -X). The first wall 120 may extend in the positive third direction +Z from the one end of the plate 110. The first wall 120 may be connected to the plate 110.

Each of the first sidewall 130 and the second sidewall 140 may extend in one direction from both sides of the first wall 120. For example, the first sidewall 130 may extend in the positive first direction +X from one side of the first wall 120, and the second sidewall 140 may extend in the positive first direction +X from another side of the first wall 120. Each of the first sidewall 130 and the second sidewall 140 may be connected to the first wall 120 and the plate 110. The first sidewall 130 and the second sidewall 140 may face each other and be spaced apart in the second direction Y.

The first seating part SP1 may be defined by the first surface 110_S1 of the plate 110, the first wall 120, the first sidewall 130, and the second sidewall 140. The first seating part SP1 may include an open surface facing the first wall 120. For example, the open surface may be disposed at an end of the first seating part SP1 in the positive first direction +X. Furthermore, the first seating part SP1 may include an open surface facing the plate 110. For example, the open surface may be disposed at an end of the first seating part SP1 in the positive third direction +Z.

Referring to FIG. 5, the second wall 150 may be disposed on the second surface 110_S2 of the plate 110. The second wall 150 may be disposed at one end of the plate 110 (e.g., an end in the positive first direction +X). The second wall 150 may extend in the negative third direction -Z from the one end of the plate 110. The second wall 150 may be connected to the plate 110.

Each of the third sidewall 160 and the fourth sidewall 170 may extend in one direction from both sides of the second wall 150. For example, the third sidewall 160 may extend in the negative first direction -X from one side of the second wall 150, and the fourth sidewall 170 may extend in the negative first direction -X from another side of the second wall 150. Each of the third sidewall 160 and the fourth sidewall 170 may be connected to the second wall 150. The third sidewall 160 and the fourth sidewall 170 may face each other and be spaced apart in the second direction Y.

The first sidewall 130 and the third sidewall 160 may be connected, and the second sidewall 140 and the fourth sidewall 170 may be connected. For example, one surface of the first sidewall 130 and one surface of the third sidewall 160 may be connected, and one surface of the second sidewall 140 and one surface of the fourth sidewall 170 may be connected. The first wall 120 and the second wall 150 may be spaced apart in the first direction X. Furthermore, the first wall 120 and the second wall 150 may not overlap in the third direction Z.

Unlike what is illustrated, in some embodiments, each of the first wall 120 and the second wall 150 may be disposed at one end of the plate 110. For example, the first wall 120 may extend in the positive third direction +Z from one end of the plate 110 (e.g., an end in the negative first direction -X), and the second wall 150 may extend in the negative third direction -Z from the one end of the plate 110. In this case, each of an open first surface facing the first wall 120 and an open second surface facing the second wall 150 may be disposed at another end of the plate 110 (e.g., an end in the positive first direction +X).

The second seating part SP2 may be defined by the second surface 110_S2 of the plate 110, the second wall 150, the third sidewall 160, and the fourth sidewall 170. The second seating part SP2 may include an open surface facing the second wall 150. For example, the open surface may be disposed at an end of the second seating part SP2 in the negative first direction -X. Furthermore, the second seating part SP2 may include an open surface facing the plate 110. For example, the open surface may be disposed at an end of the second seating part SP2 in the negative third direction -Z.

Referring to FIGS. 4 and 5, the first seating part SP1 may have a first length D1 in the first direction X. Furthermore, the first seating part SP1 may have a first width W1 in the second direction Y. The first seating part SP1 may correspond to the first type of battery cell (e.g., 10 in FIG. 2). For example, the first width W1 may correspond to a width of the first type of battery cell 10.

The second seating part SP2 may have a second length D2 in the first direction X. Furthermore, the second seating part SP2 may have a second width W2 in the second direction Y. The second seating part SP2 may correspond to the second type of battery cell (e.g., 20 in FIG. 3). For example, the second width W2 may correspond to a width of the second type of battery cell 20.

In some embodiments, the first length D1 of the first seating part SP1 and the second length D2 of the second seating part SP2 may be different from each other. For example, the first length D1 of the first seating part SP1 may be smaller than the second length D2 of the second seating part SP2. In this case, the first width W1 of the first seating part SP1 may be equal to or different from the second width W2 of the second seating part SP2.

In some embodiments, the first length D1 of the first seating part SP1 and the second length D2 of the second seating part SP2 may be equal to each other. In this case, the first width W1 of the first seating part SP1 may be different from the second width W2 of the second seating part SP2.

In some embodiments, a volume of the first seating part SP1 may be different from a volume of the second seating part SP2. Here, each of the volumes of the first seating part SP1 and the second seating part SP2 may be calculated as a product of a width W1, W2, a length D1, D2, and a height of the seating part SP1, SP2.

The socket 100 according to some embodiments of the present disclosure may include the first seating part SP1 and the second seating part SP2. Accordingly, different types of battery cells may be seated on one socket 100. As a result, a manufacturing cost of the socket 100 may be reduced. Furthermore, spatial efficiency required for storage of the socket 100 may be improved, and thus efficiency of a secondary battery manufacturing process may be improved.

In some embodiments, the socket 100 may further include the protruding line 135. The protruding line 135 may be formed to protrude in the second direction Y on each of the first sidewall 130, the second sidewall 140, the third sidewall 160, and the fourth sidewall 170. The protruding line 135 may extend in the first direction X. When the socket 100 and the socket case are coupled, the protruding line 135 may be fitted into the groove of the socket case (e.g., 230 in FIG. 2).

In some embodiments, unlike what is illustrated, an inclined portion may be formed at one end of the protruding line 135. For example, the inclined portion may be formed at each of ends of the protruding line 135 in the positive first direction +X and the negative first direction -X. When the socket 100 is inserted into the socket case in the first direction X, the protruding line 135 may be easily inserted into the groove of the socket case through the inclined portion.

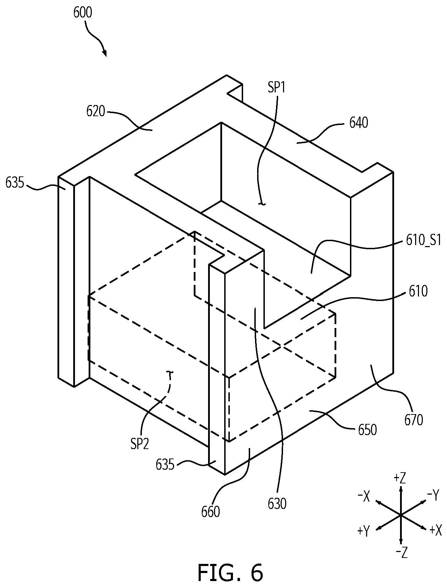

FIG. 6 is a perspective view illustrating a socket according to some embodiments of the present disclosure. For convenience of description, parts overlapping with the parts described in FIGS. 4 and 5 will be briefly described.

A socket 600 may include a plate 610, a first wall 620, a second wall 650, a first sidewall 630, a second sidewall 640, a third sidewall 660, a fourth sidewall 670, the first seating part SP1, and the second seating part SP2.

The plate 610 may be positioned at a center of the socket 600. The plate 610 may include a first surface 610_S1 and a second surface. The first wall 620, the first sidewall 630, and the second sidewall 640 may be disposed on the first surface 610_S1 of the plate 610.

The first wall 620 may extend in the positive third direction +Z from one end of the plate 610. The first sidewall 630 may extend in the positive first direction +X from one side of the first wall 620, and the second sidewall 640 may extend in the positive first direction +X from another side of the first wall 620. Each of the first sidewall 630 and the second sidewall 640 may be connected to the first wall 620 and the plate 610.

The first seating part SP1 may be defined by the first surface 610_S1 of the plate 610, the first wall 620, the first sidewall 630, and the second sidewall 640. The first seating part SP1 may include an open surface facing the first wall 620. Furthermore, the first seating part SP1 may include an open surface facing the plate 610. The first seating part SP1 may correspond to the first type of battery cell (e.g., 10 in FIG. 2).

The second wall 650 may be disposed on the second surface of the plate 610. The second wall 650 may extend in the negative third direction -Z from one end of the plate 610. The third sidewall 660 may extend in the negative first direction -X from one side of the second wall 650, and the fourth sidewall 670 may extend in the negative first direction -X from another side of the second wall 650. Each of the third sidewall 660 and the fourth sidewall 670 may be connected to the second wall 650.

The first sidewall 630 and the third sidewall 660 may be connected. The second sidewall 640 and the fourth sidewall 670 may be connected. The first wall 620 and the second wall 650 may be spaced apart in the first direction X. For example, the first wall 620 and the second wall 650 may not overlap in the third direction Z. However, the present disclosure is not limited thereto.

The second seating part SP2 may be defined by the second surface of the plate 610, the second wall 650, the third sidewall 660, and the fourth sidewall 670. The second seating part SP2 may include an open surface facing the second wall 650. Furthermore, the second seating part SP2 may include an open surface facing the plate 610. The second seating part SP2 may correspond to the second type of battery cell (e.g., 20 in FIG. 3).

In some embodiments, the socket 600 may further include a plurality of protruding lines 635 protruding from a side surface of the socket 600. Each of the plurality of protruding lines 635 may be disposed on an outside of the socket 600 and extend in the third direction Z. For example, some of the protruding lines 635 may be disposed on the first sidewall 630 and the third sidewall 660 and extend in the third direction Z. The rest of the protruding lines 635 may be disposed on the second sidewall 640 and the fourth sidewall 670 and extend in the third direction Z.

Some of the protruding lines 635 may be connected to the first wall 620. Furthermore, some of the protruding lines 635 may be connected to the second wall 650.

In some embodiments, unlike what is illustrated, an inclined portion may be formed at one end of the protruding line 635. For example, the inclined portion may be formed at both ends of the protruding line 635 in the positive third direction +Z and the negative third direction -Z. When the socket 600 is inserted into the socket case in the third direction Z, the protruding line 635 may be easily inserted into the groove of the socket case through the inclined portion.

FIGS. 7-11 illustrate a secondary battery manufacturing system according to some embodiments of the present disclosure. For convenience of description, the moving belt and the guide rail are illustrated as being excluded. The socket 100 described below may be the socket 100 described in FIGS. 4-6.

Referring to FIGS. 1 and 7, a pair of socket cases 200 may be disposed on the moving device (e.g., 30 in FIG. 1). As illustrated, the socket cases 200 may be disposed to face each other. The socket case 200 may include the bearing 210 disposed on an outside of the socket case 200. The bearing 210 may be disposed on the guide rail (e.g., 34 in FIG. 1).

The socket 100 may be coupled on each socket case 200. For example, the protruding line of the socket 100 may be coupled to the groove of the socket case 200. As illustrated, the sockets 100 may be disposed to face each other. The socket 100 may be disposed such that the first seating part SP1 is exposed. The second seating part SP2 of the socket 100 may be disposed to face the socket case 200 and may not be exposed.

The coupling member 220 may be coupled to the socket 100 and the socket case 200 to fix the socket 100 and the socket case 200. For example, the coupling member 220 may be inserted into a groove formed on one surface of the socket 100 and a groove formed on one surface of the socket case 200. The socket 100 may be prevented from being separated from the socket case 200 by the coupling member 220. For example, the coupling member 220 may be an index plunger.

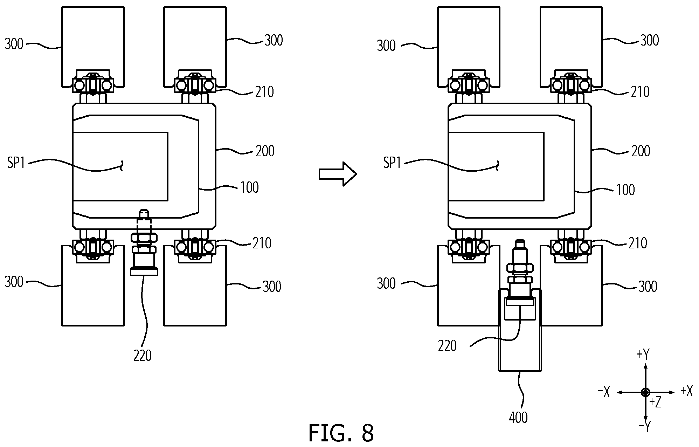

FIG. 8 illustrates operations of the fixing device and the separating device according to some embodiments of the present disclosure. Hereinafter, for convenience of description, descriptions will focus on the socket 100 disposed on a right side among the pair of sockets 100 of FIG. 7.

Referring to FIG. 8, the fixing device 300 may grip the socket case 200. Specifically, the fixing device 300 may move toward the bearing 210 of the socket case 200. Subsequently, the fixing device 300 may grip the bearing 210 of the socket case 200. The fixing device 300 may prevent the socket case 200 from moving when the socket 100 is separated from or coupled to the socket case 200.

Subsequently, the separating device 400 may separate the coupling member 220. Specifically, the separating device 400 may grip the coupling member 220. Thereafter, the separating device 400 may move the coupling member 220 in the negative second direction -Y to separate the coupling member 220 from the groove of the socket 100 and the groove of the socket case 200.

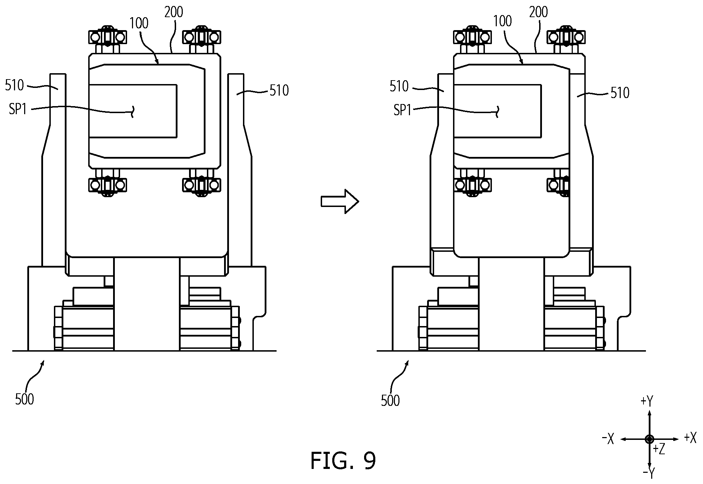

FIG. 9 illustrates an operation in which the rotating device grips the socket according to some embodiments of the present disclosure. Although the fixing device (e.g., 300 in FIG. 8) is not illustrated in FIG. 9, it should be understood that the fixing device 300 grips the bearing 210 as in FIG. 8.

Referring to FIG. 9, the rotating device 500 may move in the first direction X, the second direction Y, and the third direction Z. Although not illustrated, the rotating device 500 may move in the first direction X, the second direction Y, and the third direction Z by using a plurality of linear guides. An operation of the rotating device 500 does not interfere with operations of the fixing device and the separating device.

The rotating device 500 may grip the socket 100. The rotating device 500 may move onto a target socket 100, and a gripper 510 of the rotating device 500 may be disposed on the socket 100. Subsequently, the gripper 510 may apply pressure to the socket 100 in the first direction X to grip the socket 100. In this case, the first seating part SP1 of the socket 100 may be in an exposed state.

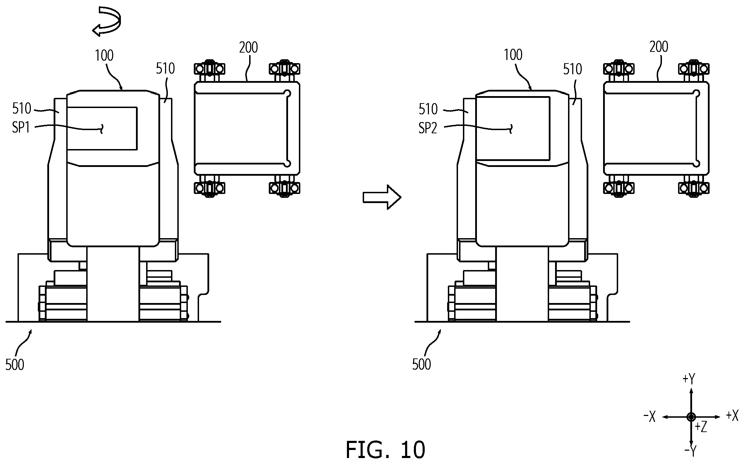

FIG. 10 illustrates an operation in which the rotating device rotates the socket according to some embodiments of the present disclosure.

Referring to FIG. 10, the rotating device 500 may separate the socket 100 from the socket case 200 and rotate the socket 100. For example, the rotating device 500 may move the socket 100 in the positive first direction +X or the negative first direction -X to separate the socket 100 from the socket case 200. Here, the first direction X may be equal to a traveling direction of the moving belt.

Subsequently, the rotating device 500 may rotate the socket 100 by 180 degrees about a Y-axis as the rotation axis. As the socket 100 is rotated by the rotating device 500, the second seating part SP2 of the socket 100 may be exposed. The first seating part SP1 of the socket 100 may face the moving belt or the socket case 200.

Although not illustrated, in some embodiments, the rotating device 500 may move the socket 100 in the positive third direction +Z to separate the socket 100 from the socket case 200. Here, the positive third direction +Z may be a direction orthogonal to the traveling direction of the moving belt. Subsequently, the rotating device 500 may rotate the socket 100 by 180 degrees about a Y-axis as the rotation axis.

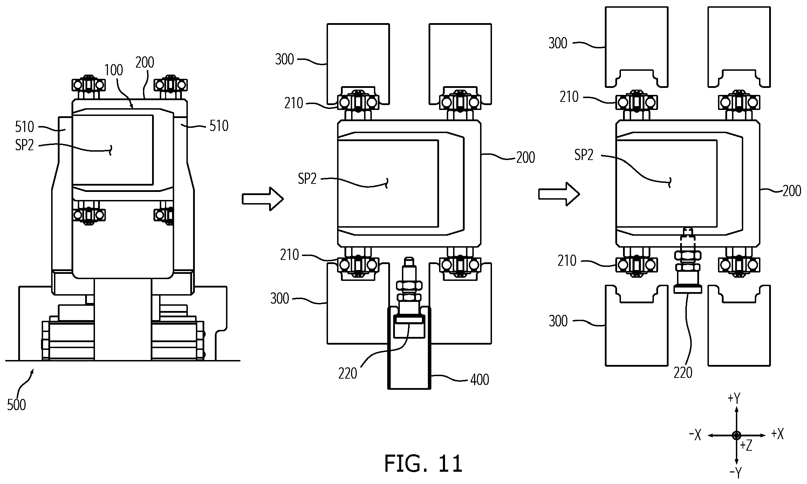

FIG. 11 illustrates an operation of coupling the socket in which the second seating part is exposed to the socket case according to some embodiments of the present disclosure.

Referring to FIG. 11, the rotating device 500 may move the socket 100 in which the second seating part SP2 is exposed to align the socket 100 on the socket case 200. For example, the rotating device 500 may move the socket 100 in the positive first direction +X to couple the socket 100 to the socket case 200. As a result, the hole of the socket 100 and the hole of the socket case 200 may be aligned.

In some embodiments, the protruding line of the socket 100 may be coupled to the groove of the socket case 200. For example, when the rotating device 500 moves the socket 100 in the positive first direction +X to couple the socket 100 to the socket case 200, the protruding line of the socket 100 may be fitted into the groove of the socket case 200.

Subsequently, the separating device 400 may insert the coupling member 220 into the hole of the socket case 200 and the hole of the socket 100. As the coupling member 220 is inserted, the socket 100 and the socket case 200 may be prevented from being separated. Subsequently, the separating device 400 is separated from the coupling member 220, and the fixing device 300 is separated from the socket case 200, so that replacement of the socket 100 may be completed.

For convenience of description, one socket 100 among the pair of sockets 100 has been described. A description of the other socket 100 may be similar to the above description. After the pair of sockets 100 are respectively coupled to the socket cases 200, a specific type of battery cell (e.g., 20 in FIG. 3) corresponding to the second seating part SP2 may be disposed on the second seating part SP2 of the socket 100.

In a conventional logistics process of battery cells, different sockets are required to transfer different types of battery cells. Accordingly, manufacturing of a socket corresponding to each battery cell is required, and a production time may increase because an operator performs replacement manually.

The secondary battery manufacturing system according to some embodiments of the present disclosure may replace the socket 100 in which the first seating part SP1 is exposed such that the second seating part SP2 is exposed, by using the fixing device 300, the separating device 400, and the rotating device 500. Accordingly, different battery cells may be transferred with one socket 100. Furthermore, as the rotating device 500 automatically rotates the socket 100 to replace the socket 100, a time required for replacing the socket 100 may be reduced. Accordingly, a production time of a secondary battery manufacturing process may be reduced, and efficiency may be increased.

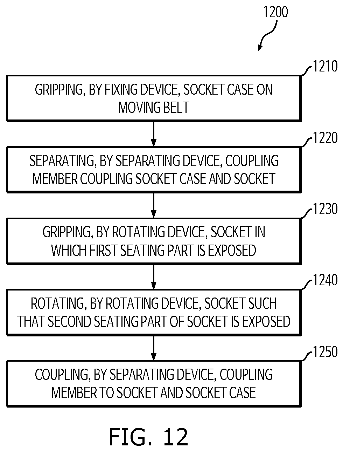

FIG. 12 is a flowchart illustrating a secondary battery manufacturing method according to some embodiments of the present disclosure. The socket described in FIG. 12 may be the socket 100 described in FIGS. 4-6.

Referring to FIG. 12, a secondary battery manufacturing 1200 may start as the fixing device grips the socket case disposed on the moving belt in operation 1210. For example, the fixing device may move toward the bearing of the socket case and grip the bearing of the socket case. Subsequently, the separating device may separate the coupling member coupling the socket case and the socket in operation 1220. The rotating device may grip the socket in which the first seating part is exposed, in operation 1230.

Subsequently, the rotating device may rotate the socket such that the second seating part of the socket is exposed, in operation 1240. For example, the rotating device may separate the socket from the socket case and rotate the socket by 180 degrees about the rotation axis. In this case, the rotating device may separate the socket from the socket case in a direction equal to or perpendicular to the traveling direction of the moving belt.

Subsequently, the rotating device may couple the rotated socket to the socket case. As a result, the hole of the socket and the hole of the socket case may be aligned. Thereafter, the separating device may couple the coupling member to the socket and the socket case in operation 1250. Subsequently, the separating device is separated from the coupling member, and the fixing device may be separated from the socket case.

Although the present disclosure has been described above with reference to limited embodiments and drawings, the present disclosure is not limited thereto, and various modifications and variations may be made by those skilled in the art to which the present disclosure belongs within the technical idea of the present disclosure and the equivalent scope of the claims described below.

## Claims

1. A socket comprising:
a plate comprising a first surface and a second surface opposite to the first surface;
a first seating part defined by the first surface of the plate, a first wall, and a first sidewall and a second sidewall extending in a first direction from both sides of the first wall, respectively; and
a second seating part defined by the second surface of the plate, a second wall, and a third sidewall and a fourth sidewall extending in the first direction from both sides of the second wall, respectively,
wherein the first sidewall and the second sidewall are spaced apart in a second direction different from the first direction,
the third sidewall and the fourth sidewall are spaced apart in the second direction,
the first wall extends in a positive direction of a third direction from one end of the plate,
the second wall extends in a negative direction of the third direction from another end of the plate, and
the third direction is different from each of the first direction and the second direction.

2. The socket as claimed in claim 1, wherein the first seating part comprises an open first surface facing the first wall, and
the second seating part comprises an open second surface facing the second wall.

3. The socket as claimed in claim 1, wherein the first wall and the second wall are spaced apart in the first direction.

4. The socket as claimed in claim 1, wherein the first seating part has a first length in the first direction,
the second seating part has a second length in the first direction, and
the first length is different from the second length.

5. The socket as claimed in claim 1, wherein the first seating part has a first length in the first direction,
the second seating part has a second length in the first direction, and
the first length is equal to the second length.

6. The socket as claimed in claim 1, wherein the first seating part has a first width in the second direction,
the second seating part has a second width in the second direction, and
the first width is different from the second width.

7. The socket as claimed in claim 1, wherein a volume of the first seating part is different from a volume of the second seating part.

8. The socket as claimed in claim 1, wherein the first seating part corresponds to a first type of battery cell,
the second seating part corresponds to a second type of battery cell, and
the first type of battery cell and the second type of battery cell are different from each other in at least one of a width or a breadth.

9. The socket as claimed in claim 1, wherein one surface of the first sidewall is connected to one surface of the third sidewall, and
one surface of the second sidewall is connected to one surface of the fourth sidewall.

10. The socket as claimed in claim 1, further comprising:
a protruding line protruding in the second direction on each of the first sidewall and the second sidewall.

11. A secondary battery manufacturing method comprising:
gripping, by a fixing device, a socket case on a moving belt;
separating, by a separating device, a coupling member coupling the socket case and a socket;
gripping, by a rotating device, the socket in which a first seating part is exposed;
rotating, by the rotating device, the socket such that a second seating part of the socket is exposed; and
coupling, by the separating device, the coupling member to the socket and the socket case.

12. The secondary battery manufacturing method as claimed in claim 11, wherein the socket case comprises a bearing coupled to an outside of the socket case, and
the gripping the socket case comprises:
moving the fixing device toward the bearing; and
gripping, by the fixing device, the bearing.

13. The secondary battery manufacturing method as claimed in claim 11, wherein the rotating the socket comprises:
separating, by the rotating device, the socket from the socket case; and
rotating, by the rotating device, the socket by 180 degrees about a rotation axis.

14. The secondary battery manufacturing method as claimed in claim 13, wherein the separating the socket from the socket case comprises:
moving, by the rotating device, the socket in a first direction to separate the socket from the socket case,
wherein the rotation axis is orthogonal to the first direction, and
the first direction is a traveling direction of the moving belt.

15. The secondary battery manufacturing method as claimed in claim 13, wherein the separating the socket from the socket case comprises:
moving, by the rotating device, the socket in a first direction to separate the socket from the socket case,
wherein the rotation axis is orthogonal to the first direction, and
the first direction is orthogonal to a traveling direction of the moving belt.

16. The secondary battery manufacturing method as claimed in claim 11, wherein the coupling comprises:
moving, by the rotating device, the socket to align the socket on the socket case; and
coupling the coupling member to each of a hole of the socket case and a hole of the socket.

17. The secondary battery manufacturing method as claimed in claim 11, further comprising:
separating the fixing device from the socket case; and
disposing a specific type of battery cell corresponding to the second seating part into the socket.

18. The secondary battery manufacturing method as claimed in claim 11, wherein the socket comprises:
a plate comprising a first surface and a second surface opposite to the first surface;
the first seating part defined by the first surface of the plate, a first wall, and a first sidewall and a second sidewall extending in a first direction from both sides of the first wall, respectively; and
the second seating part defined by the second surface of the plate, a second wall, and a third sidewall and a fourth sidewall extending in the first direction from both sides of the second wall, respectively,
wherein the first sidewall and the second sidewall are spaced apart in a second direction different from the first direction,
the third sidewall and the fourth sidewall are spaced apart in the second direction,
the first wall extends in a positive direction of a third direction from one end of the plate,
the second wall extends in a negative direction of the third direction from another end of the plate, and
the third direction is different from each of the first direction and the second direction.

19. The secondary battery manufacturing method as claimed in claim 11, wherein the socket further comprises a protruding line formed on one surface of the socket, and
the protruding line of the socket is coupled to a groove of the socket case.

20. The secondary battery manufacturing method as claimed in claim 11, wherein the first seating part corresponds to a first type of battery cell,
the second seating part corresponds to a second type of battery cell, and
the first type of battery cell and the second type of battery cell are different from each other in at least one of a width or a breadth.
